# EUROPÄISCHE PATENTSCHRIFT

(11) **EP 3 051 191 B1**
(45) Veröffentlichungstag und Bekanntmachung des Hinweises auf die Patenterteilung: **13.09.2017**
(21) Anmeldenummer: 15202823.9
(22) Anmeldetag: 28.12.2015
(51) Int. Cl.: F16K 11/074, F16K 11/16, F16K 11/076, F01P 7/16

(54) **VENTILEINRICHTUNG, INSBESONDERE ZUM EINSTELLEN EINES KÜHLMITTELSTROMS IN EINEM KÜHLSYSTEM FÜR EINE BRENNKRAFTMASCHINE EINES KRAFTFAHRZEUGS**
VALVE DEVICE, IN PARTICULAR FOR ADJUSTING A COOLANT FLOW IN A COOLING SYSTEM FOR A COMBUSTION ENGINE OF A MOTOR VEHICLE
DISPOSITIF DE SOUPAPE, EN PARTICULIER DESTINE A REGLER UN FLUX DE REFRIGERANT DANS UN SYSTEME DE REFROIDISSEMENT POUR MOTEUR A COMBUSTION INTERNE DE VEHICULE AUTOMOBILE

(30) Priorität: 27.01.2015 DE 102015201366
(43) Veröffentlichungstag der Anmeldung: 03.08.2016
(73) Patentinhaber: Mahle International GmbH, 70376 Stuttgart (DE)
(72) Erfinder: KLEIN, Hans-Peter, 71397 Leutenbach (DE); STEURER, Hans-Ulrich, 70376 Stuttgart (DE); DIETERICH, Mario, 71540 Murrhardt (DE); ZUREL, Radoslaw, 71686 Remseck (DE)
(74) Vertreter: BRP Renaud & Partner mbB Rechtsanwälte Patentanwälte Steuerberater

(56) Entgegenhaltungen:
- DE-A1- 2 249 895
- DE-A1- 3 711 949
- DE-A1-102008 001 635
- GB-A- 412 109
- GB-A- 2 277 572
- US-A- 3 948 286
- US-A1- 2002 066 276
- US-A1- 2006 060 245
- US-A1- 2013 167 786
- US-A1- 2013 221 116

## Beschreibung

Die Erfindung betrifft eine Ventileinrichtung, insbesondere zum Einstellen eines Kühlmittelstroms in einem Kühlsystem eines Kraftfahrzeugs. Die Erfindung betrifft weiterhin ein Kühlsystem mit einer solchen Ventileinrichtung für eine Brennkraftmaschine eines Kraftfahrzeugs.

Moderne Brennkraftmaschinen werden in der Regel mit einem Kühlsystem ausgestattet, um im Betrieb der Brennkraftmaschine erzeugte Abwärme abzuführen. Auf diese Weise kann der Kraftstoffverbrauch der Brennkraftmaschine in nicht unerheblichem Maße gesenkt werden. Gleichzeitig kann auch der Ausstoß an umweltschädlichen Schadstoffen wie etwa CO₂ aus der Brennkraftmaschine deutlich verringert werden. Die von dem Kühlsystem zu erbringenden Kühlleistung kann jedoch in Abhängigkeit vom momentanen Betriebszustand der Brennkraftmaschine erheblich variieren, was für das verwendete Kühlsystem ein komplexes Thermomanagement erforderlich macht. Beispielsweise soll die vom Kühlsystem zu erbringende Kühlleistung beim Warmlaufen der Brennkraftmaschine in der Regel gering gehalten werden, damit sich in den Zylindern der Brennkraftmaschine möglichst schnell eine vorgegebene, hinsichtlich Schadstoffausstoß und Kraftstoffverbrauch vorteilhafte Betriebstemperatur einstellen kann.

Moderne Kühlsysteme erlauben durch geeignete Auslegung des Kühlsystems auch eine Kühlung der Zylinderköpfe der Brennkraftmaschine unabhängig von deren Zylinderblöcken. Hierzu kann das Kühlsystem getrennte Kühlkreisläufe für Zylinderkopf und Zylinderblock aufweisen. Um das das Kühlsystem durchströmende Kühlmittel nach der Aufnahme von Abwärme aus der Brennkraftmaschine und der damit verbundenen Erwärmung des Kühlmittels einer erneuten Abkühlung zu unterziehen, kann im Kühlmittelkreislauf des Kühlsystems ein Wärmetauscher angeordnet sein, der durch thermische Wechselwirkung mit besagtem Kühlmittel dieses wie gewünscht abkühlt, bevor es im Zuge eines neuen Strömungs-Zyklusses erneut Abwärme aus der Brennkraftmaschine aufnimmt. In modernen Kühlsystemen ist zum Zwecke des optimierten Thermomanagements oftmals ein sogenannter Kurzschlusskreislauf vorgesehen, der besagten Wärmetauscher bzw. Kühler fluidisch überbrückt.

Um das durch das Kühlsystem strömende Kühlmittel in Abhängigkeit vom aktuellen Betriebszustand der Brennkraftmaschine in der gewünschten Weise auf die verschiedenen Kühlmittelkreisläufe zu verteilen, sind aus dem Stand der Technik elektrisch angetriebene Ventileinrichtungen bekannt, mittels welcher der Volumenstrom des Kühlmittels auf die verschiedenen Teil-Kreisläufe des Kühlsystems verteilt werden kann. Beispielsweise beschreiben die US20130221116 und die DE 10 2013 208 192 A1 ein solches, elektrisch antreibbares Ventil.

Es ist eine Aufgabe der vorliegenden Erfindung, bei der Entwicklung von Ventileinrichtungen, insbesondere zur Verwendung für Kühlsysteme von Brennkraftmaschinen, neue Wege aufzuzeigen.

Diese Aufgabe wird durch den Gegenstand der unabhängigen Patentansprüche gelöst. Bevorzugte Ausführungsformen sind Gegenstand der abhängigen Patentansprüche.

Grundgedanke der Erfindung ist demnach, den Ventilkörper einer Ventileinrichtung in Form einer drehverstellbaren Welle zu realisieren, auf der drehfest und im Abstand zueinander zwei Ventilelemente angeordnet sind. Diese dienen dazu, in Abhängigkeit von der momentanen Drehpositionen der Welle und somit der beiden Ventilelemente wenigstens vier im Gehäuse der Ventileinrichtung vorgesehene Fluiddurchlässe wahlweise zu öffnen oder zu verschließen. Durch eine Drehbewegung der Welle, die hierzu elektrisch - etwa mit Hilfe eines Elektromotors - angetrieben werden kann, lässt sich auf einfache Weise die gewünschte Drehposition einstellen. Im Ergebnis wird eine konstruktiv einfach aufgebaute Ventileinrichtung mit guten Verschleißeigenschaften und, damit einhergehend, mit hoher Lebensdauer, bereitgestellt, welche zudem eine Steuerung des Fluidstroms - typischerweise eines Kühlmittels - durch vier oder mehr Fluiddurchlässe erlaubt. Aufgrund des einfachen Aufbaus ist auch der für die nominelle Funktionsweise der Ventilelemente erforderliche Aufwand zur fluidischen Abdichtung bei der hier vorgestellten Ventileinrichtung besonders gering.

Die hier vorgestellte, erfindungsgemäße Ventileinrichtung eignet sich daher besonders zur Verwendung in einem Kühlsystem für eine Brennkraftmaschine mit mehreren, von einem Kühlmittel durchströmbaren Kühlmittel-Teilkreisläufen. Insbesondere eignet sich die erfindungsgemäße Ventileinrichtung dazu, eine Durchströmung wenigstens der vier folgenden Kühlmittel-Teilkreisläufe mit einem Kühlmittel zu steuern:
- die Durchströmung eines Kühlerkreislaufs, in dem ein Wärmetauscher/Kühler zum Abkühlen des Kühlmittels angeordnet ist,
- die Durchströmung eines den Kühlerkreislauf überbrückenden Kurzschluss-Kreislaufs,
- die Durchströmung eines Zylinderblockkreislaufs, in welchem das Kühlmittel in thermische Wechselwirkung mit dem Zylinderkopf der Zylinder der Brennkraftmaschine tritt, um diesen zu kühlen,
- die Durchströmung eines Zylinderkopfkreislaufs, in welchem das Kühlmittel in thermische Wechselwirkung mit dem Zylinderblock der Zylinder der Brennkraftmaschine tritt, um diesen zu kühlen.

Optional kann auch die Durchströmung eines fünften Kühlmittel-Teilkreislaufes, des sogenannten "Thermostatventil-Bypasses" mit dem Kühlmittel gesteuert werden.

Eine erfindungsgemäße Ventileinrichtung, zum Einstellen eines Kühlmittelstroms in einem Kühlsystem eines Kraftfahrzeugs umfasst ein einen Gehäuseinnenraum begrenzendes Gehäuse, in welchem wenigstens ein erster, ein zweiter, ein dritter und ein vierter Fluiddurchlass, jeweils zum Durchströmen mit einem Fluid, vorgesehen sind. Die Fluiddurchlässe können, wie oben erläutert, fluidisch mit den einzelnen Teil-Kühlkreisläufen eines Kühlsystems für eine Brennkraftmaschine kommunizieren. Erfindungsgemäß ist im Gehäuseinnenraum ein Ventilkörper angeordnet, der eine Welle umfasst, die relativ zum Gehäuse entlang einer Drehrichtung drehverstellbar ist. Auf der Welle sind, jeweils drehfest mit der Welle verbunden und im Abstand zueinander angeordnet, ein erstes und ein zweites Ventilelement vorgesehen. Die beiden Ventilelemente sind derart ausgebildet, dass sie in Abhängigkeit von der Drehposition der Welle jeden der vier Fluiddurchlässe jeweils zum Durchströmen mit dem Fluid freigeben oder, insbesondere fluiddicht, verschließen. Gemäß der Erfindung sind der erste Fluiddurchlass als erster Fluideinlass und der zweite Fluiddurchlass als zweiter Fluideinlass, jeweils zum Einleiten des Fluids in den Gehäuseinnenraum, ausgebildet. Darüber hinaus sind der dritte Fluiddurchlass als erster Fluidauslass und der vierte Fluiddurchlass als zweiter Fluidauslass, jeweils zum Ausleiten des Fluids aus dem Gehäuseinnenraum, ausgebildet. Vorstellbar ist etwa, zu diesem Zweck die Fluiddurchtässe als im Gehäuse vorgesehene Durchbrüche auszubilden, von welchen ein geeigneter Flansch - beispielsweise in der Art eines Rohrstutzens - absteht. An besagtem Flansch können dann die jeweiligen Kühlmittel-Teilkreisläufe angeschlossen werden. Auf diese kann die erfindungsgemäße Ventileinrichtung mit vergleichsweise geringem technischem Aufwand in das bereits erläuterte Kühlsystem zum Kühlen einer Brennkraftmaschine integriert werden. Gemäß der Erfindung ist die Ventileinrichtung derart ausgebildet, dass in einer ersten Drehposition der Welle alle vier Fluiddurchlässe jeweils entweder vom ersten oder zweiten Ventilkörper verschlossen sind. Demgegenüber ist in einer zweiten Drehposition der zweite Fluideinlass verschlossen und der erste Fluideinlass, insbesondere vollständig, zum Durchströmen mit dem Fluid freigegeben. Weiterhin ist in besagter zweiter Drehposition der erste Fluidauslass verschlossen und der zweite Fluidauslass zum Durchströmen mit dem Fluid freigegeben. In einer dritten Drehposition sind die beiden Fluideinlässe zum Durchströmen mit dem Fluid freigegeben sind und wenigstens einer der beiden Fluidauslässe ist wenigstens teilweise zum Durchströmen mit dem Fluid freigegeben. In einer vierten Drehposition sind die beiden Fluideinlässe und der erste Fluidauslass, insbesondere vollständig, zum Durchströmen mit dem Fluid freigegeben sind, und der zweite Fluidauslass ist geschlossen. Die vorgenannten Eigenschaften der Ventileinrichtung lassen sich konstruktiv erreichen, indem die Ventilelemente mit einer geeigneten Geometrie versehen werden, so dass sie je nach Drehposition die betreffenden Fluiddurchlässe, etwa durch Abdecken, vollständig verschließen oder wenigstens teilweise oder vollständig zum Durchströmen mit dem Fluid freigeben.

In einer vorteilhaften Weiterbildung der Erfindung kann die Ventileinrichtung derart ausgebildet sein, dass durch ein Drehverstellen der Welle zwischen der dritten und der vierten Drehposition entlang der Drehrichtung ein Verschlussgrad des ersten Fluidauslasses durch das zweite Ventilelement graduell zunimmt und ein Verschlussgrad des zweiten Fluidauslasses durch das zweite Ventilelement graduell abnimmt oder umgekehrt.

In einer bevorzugten Ausführungsform kann die Welle eine Mehrzahl von Zwischenpositionen aufweisen, die von den vier oben genannten, vorbestimmten Drehpositionen verschieden sind und in welchen wenigstens einer der Fluiddurchlässe vom ersten oder zweiten Ventilelement teilweise, insbesondere vollständig, verschlossen ist.

In einer weiteren bevorzugten Ausführungsform, deren technische Realisierung mit einem besonders geringen konstruktiven Aufwand verbunden ist, kann das erste Ventilelement als erste Ventilscheibe ausgebildet sein, die drehfest an der Welle angeordnet ist. In analoger Weise kann das zweite Ventilelement als zweite Ventilscheibe ausgebildet sein, die entlang einer axialen Richtung, die durch eine Drehachse der Welle definiert ist, im Abstand zur ersten Ventilscheibe drehfest an der Welle angeordnet ist. Bei dieser Ausführungsform bietet es sich an, den ersten und zweiten Fluiddurchlass, also insbesondere den ersten und zweiten Fluideinlass, derart am Gehäuse anzuordnen, dass sie von der ersten Ventilscheibe verschlossen werden können. In analoger Weise bietet es sich an, den dritten und vierten Fluiddurchlass, also insbesondere den ersten und zweiten Fluidauslass, derart am Gehäuse anzuordnen, dass sie von der zweiten Ventilscheibe verschlossen werden können. Die Ausbildung der Ventilelemente als Ventilscheibe bietet sich insbesondere dann an, wenn das Gehäuse der Ventileinrichtung in der Art eines Zylinders ausgebildet ist und die Fluiddurchlässe in den beiden Stirnseiten eines solchen zylindrischen Gehäuses angeordnet werden sollen. Die beiden Ventilscheiben können in diesem Szenario insbesondere jeweils in der Art von Zylindern ausgebildet sein.

In einer vorteilhaften Weiterbildung der vorangehend erläuterten Ausführungsform kann in der ersten Ventilscheibe wenigstens ein erster Durchbruch ausgebildet sein, welcher die erste Ventilscheibe in der axialen Richtung durchsetzt.

Dieser erste Durchbruch ist dabei derart ausgebildet bzw. in der ersten Ventilscheibe positioniert, dass er den ersten und/oder den zweiten Fluiddurchlass in Abhängigkeit von der momentan eingestellten Drehposition der Welle verschließt oder zum Durchströmen mit dem Fluid freigibt. Alternativ oder zusätzlich kann auch in der zweiten Ventilscheibe wenigstens ein zweiter Durchbruch ausgebildet sein, welcher die zweite Ventilscheibe in der axialen Richtung durchsetzt. Besagter zweiter Durchbruch ist dabei derart ausgebildet bzw. in der zweiten Ventilscheibe positioniert, dass er den dritten und/oder den vierten Fluiddurchlass in Abhängigkeit von der momentan eingestellten Drehposition der Welle verschließt oder zum Durchströmen mit dem Fluid freigibt.

In einer vorteilhaften Weiterbildung der vorangehend erläuterten Ausführungsform können in der ersten Ventilscheibe genau zwei erste Durchbrüche vorgesehen sein, die entlang der Drehrichtung im Abstand zueinander in der ersten Ventilscheibe angeordnet sind. Somit können die beiden Durchbrüche bei geeigneter Anordnung des ersten und zweiten Fluidauslasses relativ zur ersten Ventilscheibe und zu den in der Ventilscheibe vorgesehenen Durchbrüchen diesen beiden Fluiddurchlässen zugeordnet werden. Einer der beiden ersten Durchbrüche mag dann dazu dienen, bei entsprechend eingestellter Drehposition der Welle den ersten Fluiddurchlass zum Durchströmen mit dem Fluid freizugeben. Entsprechend kann auch der zweite der beiden ersten Durchbrüche bei entsprechend eingestellter Drehposition der Welle den zweiten Fluiddurchlass zum Durchströmen mit dem Fluid freigeben.

Alternativ oder zusätzlich zu den beiden ersten Durchbrüchen in der ersten Ventilscheibe können auch in der zweiten Ventilscheibe genau zwei zweite Durchbrüche vorgesehen werden, die entlang der Drehrichtung im Abstand zueinander in der zweiten Ventilscheibe angeordnet sind. Einer der beiden zweiten Durchbrüche kann dann wiederum dazu dienen, bei entsprechend eingestellter Drehposition der Welle den dritten Fluiddurchlass zum Durchströmen mit dem Fluid freizugeben. Entsprechend kann auch der zweite der beiden zweiten Durchbrüche bei entsprechend eingestellter Drehposition der Welle den vierten Fluiddurchlass zum Durchströmen mit dem Fluid freigeben.

Besonders zweckmäßig kann der erste und/oder zweite Durchbruch in einer Draufsicht auf die erste oder zweite Ventilscheibe in axialer Richtung die Geometrie eines Ringsegments aufweisen. Auf diese Weise kann ein gleichmäßiger Verschlussvorgang des einem solchen ringsegmentartigen Durchbruch zugeordneten Fluiddurchlasses durch eine einfache Drehbewegung der Welle erreicht werden. Unter "gleichmäßig" wird vorliegend verstanden, dass der von der Ventilscheibe abgedeckte Öffnungsquerschnitt durch Drehen der Welle linear vom Drehwinkel der Drehwelle abhängt. In Varianten ist auch ein nicht-linearer Zusammenhang, beispielsweise eine sigmoidale Abhängigkeit vorstellbar.

In einer alternativen bevorzugten Ausführungsform kann das Verschließen der Fluiddurchlässe mit Hille einer am Ventilkörper vorgesehenen Kulisse erfolgen. Hierzu kann der erste Ventilkörper, insbesondere die bereits vorgestellte erste Ventilscheibe, wenigstens einen Umfangswand-Abschnitt aufweisen, welcher den ersten und/oder den zweiten Fluiddurchlass in Abhängigkeit von der in der Welle eingestellten Drehposition verschließt oder zum Durchströmen mit dem Fluid freigibt. Alternativ oder zusätzlich zum ersten Ventilelement kann auch der zweite Ventilkörper, insbesondere die zweite Ventilscheibe, mit wenigstens einem Umfangswand-Abschnitt versehen werden, welcher den dritten und/oder vierten Fluid-durchlass in Abhängigkeit von der Drehposition des Ventilkörpers verschließt oder zum Durchströmen mit dem Fluid freigibt. Die Ausbildung der Ventilelemente mit Umfangswand-Abschnitten zum Verschließen der im Gehäuse vorgesehenen Fluiddurchlässe bietet sich insbesondere dann an, wenn das Gehäuse der Ventileinrichtung in der Art eines Zylinders ausgebildet werden soll und die Fluiddurchlässe in einer Umfangswand eines solchen zylindrischen Gehäuses angeordnet werden sollen.

In einer weiteren alternativen Ausführungsform besitzt die erste Ventilscheibe in Draufsicht entlang der axialen Richtung eine unrunde Randkontur und weist einen radial nach außen, von der Drehachse der Welle weg abstehenden ersten Fortsatz auf. Der wenigstens eine Fortsatz verschließt in Abhängigkeit von der Drehposition der Welle den ersten und/oder zweiten Fluiddurchlass oder gibt diesen zum Durchströmen mit dem Fluid frei. Alternativ oder zusätzlich kann auch die zweite Ventilscheibe in Draufsicht entlang der axialen Richtung mit besagter unrunder Randkontur und mit wenigstens einem radial nach außen, von der Drehachse der Welle weg abstehenden Fortsatz ausgestattet sein. In analoger Weise zur ersten Ventilscheibe verschließt auch der wenigstens eine Fortsatz der zweiten Ventilscheibe den dritten und/oder vierten Fluiddurchlass in Abhängigkeit von der Drehposition oder gibt diesen zum Durchströmen mit dem Fluid frei.

In einer vorteilhaften Weiterbildung der Erfindung kann die Ventileinrichtung eine mit der Welle antriebsverbundene Antriebseinheit zum Drehverstellen der Welle zwischen den Drehpositionen umfassen. Die Antriebseinheit kann vorzugsweise ein Elektromotor, besonders bevorzugt ein Gleichstrommotor, sein. Dies erlaubt eine gezielte Ansteuerung der Welle zum exakten Positionieren der Welle in einer der Drehpositionen oder in einer Zwischenposition zwischen diesen Drehpositionen.

In einer vorteilhaften Weiterbildung der Erfindung kann die Welle einen ersten axialen Wellenabschnitt, an welchem drehfest das erste Ventilelement angeordnet ist, aufweisen. Weiterhin umfasst die Welle einen relativ zum ersten Wellenabschnitt drehverstellbaren zweiten axialen Wellenabschnitt, an welchem drehfest das zweite Ventilelement angeordnet ist. In dieser Ausführungsform sind der erste axiale Wellenabschnitt mit einer ersten Antriebseinheit und der zweite Wellenabschnitt mit einer zweiten Antriebseinheit antriebsverbunden. Dies erlaubt eine Ansteuerung und somit ein Verstellen der beiden Ventilelemente unabhängig voneinander. Die tatsächliche Drehposition der Welle ergibt sich somit als Kombination der Drehposition der beiden axialen Wellenabschnitte. Dies eröffnet, insbesondere im Falle der Ausbildung der beiden Ventilelemente als Ventilscheiben, die Möglichkeit, die beiden mittels des ersten Ventilelements verschließbaren Fluiddurchlässe unabhängig von den beiden mittels des zweiten Ventilelements verschließbaren Fluiddurchlässen zu verschließen oder zum Durchströmen mit dem Fluid freizugeben.

In einer technisch besonders einfach herzustellenden Ausführungsform kann die die Welle der Ventileinrichtung aus einem Metall, insbesondere aus Stahl, hergestellt sein, wohingegen wenigstens eines der Ventilelemente aus einem an die Welle angespritzten Kunststoff hergestellt ist. Besonders bevorzugt können beide Ventilelemente aus einem an die Welle angespritzten Kunststoff hergestellt sein. Für diese Ausführungsform ergeben sich erhebliche Kostenvorteile bei der Herstellung.

In einer weiteren bevorzugten Ausführungsform kann auf den Stirn- und/oder Umfangsseiten wenigstens einer der beiden Ventilscheiben eine Beschichtung aus einem reibungsmindernden Material vorgesehen sein. Auf diese Weise können beim Drehen der Ventilscheiben auftretende Verschleißeffekte minimiert werden.

In einer anderen bevorzugten Ausführungsform ist wenigstens eines der beiden Ventilelemente - vorzugsweise gilt dies für beide Ventilelemente - entlang der axialen Richtung bewegbar an der Welle angeordnet. In dieser Ausführungsform umfasst die Ventileinrichtung eine Vorspanneinrichtung, welche das erste und/oder das zweite Ventilelement zur jeweils benachbarten Stirnwand des Gehäuses hin vorspannt. Somit können die Fluiddurchlässe abgedichtet werden, indem die Ventilscheiben gegen die Stirnwände des Gehäuses gedrückt werden.

In einer vorteilhaften Weiterbildung können im Gehäuse genau fünf Fluiddurchlässe vorgesehen sein, die jeweils von einem der beiden Ventilelemente verschließbar oder zum Durchströmen mit dem Fluid freigebbar sind. Dies erlaubt die Verwendung der Ventileinrichtung in einem Kühlmittelkreislauf mit Thermostatventil-Bypass.

Die Erfindung betrifft weiterhin ein Kühlsystem für eine Brennkraftmaschine eines Kraftfahrzeugs mit wenigstens einem Zylinderkopf und wenigstens einem Zylinderblock. Das Kühlsystem umfasst einen Kühlmittelkreislauf zum Zirkulieren eines Kühlmittels. Hierzu umfasst der Kühlmittelkreislauf eine vorangehend vorgestellte Ventileinrichtung. Der erste Fluiddurchlass der Ventileinrichtung, insbesondere der erste Fluideinlass, kommuniziert dabei fluidisch mit einem Zylinderblock-Teilkreislauf des Kühlmittelkreislaufs. Der zweite Fluiddurchlass, insbesondere der zweite Fluideinlass, kommuniziert fluidisch mit einem Zylinderkopf-Teilkreislauf des Kühlmittelkreislaufs. Dabei ist der Zylinderkopf-Teilkreislauf thermisch an den wenigstens einen Zylinderkopf der Brennkraftmaschine und der Zylinderblock-Teilkreislauf an den wenigstens einen Zylinderblock der Brennkraftmaschine gekoppelt. Der dritte Fluiddurchlass, insbesondere der erste Fluidauslass, kommuniziert fluidisch mit einem Kurzschluss-Teilkreislauf des Kühlmittelkreislaufs, und der vierte Fluiddurchlass, insbesondere der zweite Fluidauslass, kommuniziert fluidisch mit einem Kühler-Teilkreislauf des Kühlmittelkreislaufs. Der Kurzschluss-Teilkreislauf ist fluidisch parallel zum Kühler-Teilkreislauf geschaltet und mündet stromab eines im Kühler-Teilkreislauf angeordneten Kühlers in einem Abzweigpunkt wieder in den Kühler-Teilkreislauf. Die erfindungsgemäße Ventileinrichtung mit vier Fluiddurchlässen erlaubt eine präzise Steuerung der Verteilung des Kühlmittelstroms auf die vier Teil-Kreisläufe des Kühlmittelkreislaufs, und zwar insbesondere in Abhängigkeit von verschiedenen Betriebszuständen der Brennkraftmaschine.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine schaltplan-artige Darstellung eines Kühlmittelkreislaufs, in welchem die erfindungsgemäße Ventileinrichtung verwendet wird,
- Fig. 2: ein Beispiel einer erfindungsgemäßen Ventileinrichtung in einer Schnittdarstellung,
- Fig. 3: den Ventilkörper der Ventileinrichtung mit einer Welle und zwei Ventilscheiben in einer perspektivischen Ansicht,
- Fig. 4: eine Draufsicht auf eine der Ventilscheiben des Ventilkörpers der Figur 3,
- Fig. 5: eine erste Variante der in Figur 4 dargestellten Ventilscheibe,
- Fig. 6: eine zweite Variante der in Figur 4 dargestellten Ventilscheibe,
- Fig. 7: eine Variante des in Figur 3 gezeigten Ventilkörpers.
- Fig. 8: eine weiterbildende Variante des Kühlmittelkreislaufs der Figur 1 mit einem im Zylinderblock-Teilkreislauf angeordneten Thermostatventil und einem dieses Thermostatventil fluidisch umgehenden Thermostat-Bypass-Teilkreislauf.

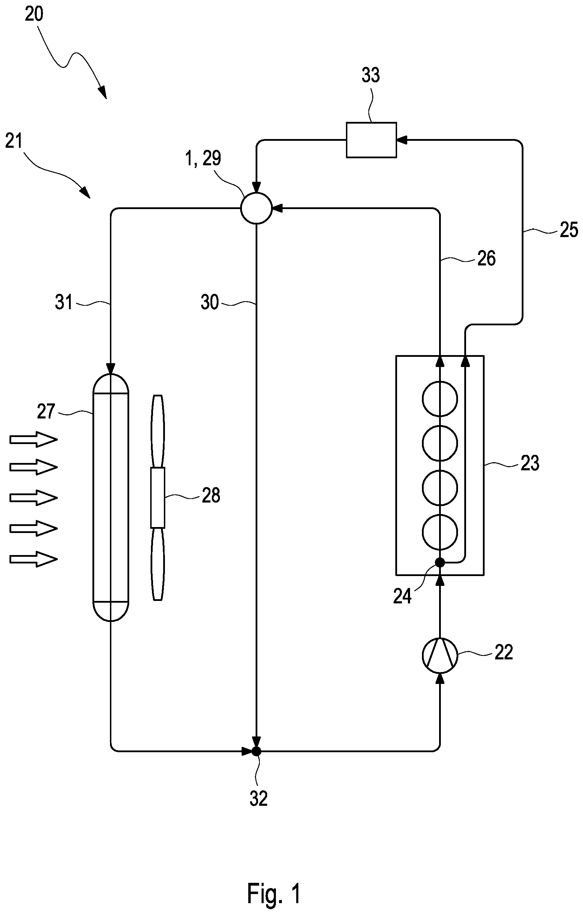

Figur 1 illustriert schematisch den Aufbau eines Kühlsystems 20, in welchem eine erfindungsgemäße Ventileinrichtung 1 verbaut ist. Das Kühlsystem 20 umfasst einen Kühlerkreis 21, in welchem ein Kühlmittel zirkuliert. Im Kühlmittelkreislauf 21 ist eine Pumpvorrichtung 22 zum Fördern des Kühlmittels im Kühlmittelkreislauf 21 angeordnet. Stromab der Pumpvorrichtung 22 ist eine Brennkraftmaschine 23 angeordnet, die durch thermische Wechselwirkung mit dem Kühlmittel gekühlt wird. Im Bereich der Brennkraftmaschine 23 ist im Kühlmittelkreislauf 21 ein erster Abzweigpunkt 24 vorgesehen, in welchem der Kühlmittelkreislauf 21 in einen Zylinderblock-Teilkreislauf 25 und in einen Zylinderkopf-Teilkreislauf 26 aufgeteilt wird. Der Zylinderblock-Teilkreislauf 25 dient zur Kühlung des wenigstens einen Zylinderblocks der Brennkraftmaschine 23, der Zylinderkopf-Teilkreislauf 26 zur Kühlung des wenigstens einen Zylinderkopfs der Brennkraftmaschine 23. Im Zylinderblock-Teilkreislauf 25 ist eine Thermostat-Vorrichtung 33 angeordnet. Strom-ab der Brennkraftmaschine 23 ist eine erfindungsgemäße Ventileinrichtung 1 angeordnet, in welcher die beiden Teilkreisläufe 25 und 26 wieder zusammengeführt werden. Stromab der Ventileinrichtung 1 ist ein Kühler 27 angeordnet, mittels welchem das Kühlmittel, welches im Zuge der thermischen Wechselwirkung mit der von der Brennkraftmaschine 23 erzeugten Abwärme erwärmt wurde, wieder abgekühlt werden kann. Der Kühler 27 kann als Wärmetauscher ausgebildet sein und umfasst im Beispiel der Figur 1 einen Lüfter 28. Stromab des Kühlers 27 ist die bereits erwähnte Pumpvorrichtung 22 angeordnet, so dass der Kühlmittelkreislauf 21 geschlossen ist.

Die Ventileinrichtung 1 fungiert als zweiter Abzweigpunkt 29, an welchem ein Kurzschluss-Teilkreislauf 30 abzweigt, welcher den Kühler 27 fluidisch überbrückt. Der den Kühler 27 enthaltende Teilkreislauf, der folglich fluidisch parallel zum Kurzschluss-Teilkreislauf 30 geschaltet ist, wird im Folgenden als Kühler-Teilkreislauf 31 bezeichnet. Der Kurzschluss-Teilkreislauf 30 und der Kühler-Teilkreislauf 31 werden wie in Figur 1 gezeigt in einem dritten Abzweigpunkt 32 wieder zusammengeführt.

Die Ventileinrichtung 1 dient dazu, die Durchströmungsmenge des Kühlmittels durch die vier Teilkreisläufe des Kühlmittelkreislaufs 21, also durch den Zylinderblock-Teilkreislauf 25, den Zylinderkopf-Teilkreislauf 26, Kühler-Teilkreislauf 31 und den Kurzschluss-Teilkreislauf 30 zu steuern/regeln.

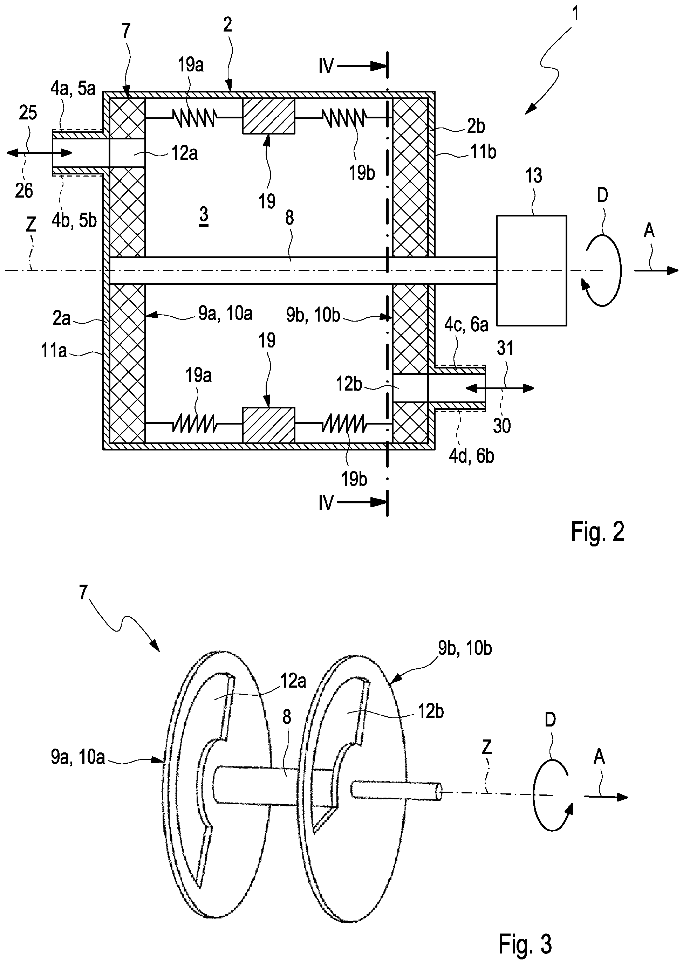

Die Figur 2 zeigt den prinzipiellen Aufbau der Ventileinrichtung 1 in einem Längsschnitt. Die Ventileinrichtung 1 umfasst demnach ein Gehäuse 2, das einen Gehäuseinnenraum 3 begrenzt. Im Gehäuse 2 sind ein erster, ein zweiter, ein dritter und ein vierter Fluiddurchlass 4a, 4b, 4c, 4d vorgesehen. Der erste Fluiddurchlass 4a ist als erster Fluideinlass 5a ausgebildet, der fluidisch mit dem Zylinderblock-Teilkreislauf 25 kommuniziert. Der zweite Fluiddurchlass 4b - im Längsschnitt der Figur 1 nur in gestrichelter Darstellung angedeutet - ist als zweiter Fluideinlass 5b ausgebildet, der fluidisch mit dem Zylinderkopf-Teilkreislauf 26 kommuniziert. Der dritte Fluiddurchlass 4c ist als erster Fluidauslass 6a ausgebildet, der fluidisch mit dem Kühler-Teilkreislauf 31 kommuniziert, und der vierte Fluiddurchlass 4d - im Längsschnitt der Figur 1 nur in gestrichelter Darstellung angedeutet - ist als zweiter Fluidauslass 6b ausgebildet, der fluidisch mit dem Kurzschluss-Teilkreislauf 30 kommuniziert.

Wie Figur 2 erkennen lässt, ist im Gehäuseinnenraum 3 ein Ventilkörper 7 angeordnet, der eine Welle 8 umfasst, die relativ zum Gehäuse 2 entlang einer Drehrichtung D drehverstellbar ist. Auf der Welle 8 sind jeweils drehfest und im Abstand zueinander ein erstes und ein zweites Ventilelement 9a, 9b angeordnet. Entsprechend der Figur 2 ist das erste Ventilelement 9a als erste Ventilscheibe 10a ausgebildet ist, die drehfest an der Welle angeordnet ist. In analoger Weise ist das zweite Ventilelement 9b als zweite Ventilscheibe 10b ausgebildet, die entlang einer axialen Richtung A im Abstand zur ersten Ventilscheibe 10a drehfest an der Welle 8 angeordnet ist. Die axiale Richtung A ist dabei durch eine Drehachse Z der Welle 8 definiert, welche bevorzugt mit ihrer Mittellängsachse zusammenfällt. Die Ausbildung der Ventilelemente 9a, 9b als Ventilscheiben 10a, 10b bietet sich insbesondere dann an, wenn das Gehäuse 2 der Ventileinrichtung 1 wie in Figur 1 dargestellt in der Art eines Zylinders ausgebildet ist und die Fluiddurchlässe 4a-4d in den Stirnseiten 11a, 11b des zylindrischen Gehäuses 2 vorgesehen sind.

Die Ventileinrichtung 1 kann eine mit der Welle 8 antriebsverbundene Antriebseinheit 13, beispielsweise in Form eines in Figur 2 nur grobschematisch angedeuteten Elektromotors, zum Drehverstellen der Welle 8 umfassen. Besonders bevorzugt wird als Elektromotor ein Gleichstrommotor verwendet.

In einer in Figur 2 nicht näher dargestellten weiterbildenden Variante des Beispiels kann die Welle 8 einen ersten axialen Wellenabschnitt, an welchem drehfest das erste Ventilelement 9a in Form der ersten Ventilscheibe 10a angeordnet ist, aufweisen. In diesem Szenario umfasst die Welle 8 ferner einen relativ zum ersten Wellenabschnitt drehverstellbaren zweiten axialen Wellenabschnitt, an welchem drehfest das zweite Ventilelement angeordnet ist. In dieser Ausführungsform ist der erste axiale Wellenabschnitt mit einer ersten Antriebseinheit und der zweite Wellenabschnitt mit einer zweiten Antriebseinheit antriebsverbunden. Dies erlaubt eine Ansteuerung und somit ein Verstellen der beiden Ventilelemente 9a, 9b unabhängig voneinander. Die tatsächliche Drehposition der Welle 8 ergibt sich somit als Kombination der Drehposition der beiden axialen Wellenabschnitte. Dies eröffnet, insbesondere im Falle der Ausbildung der beiden Ventilelemente als Ventilscheiben 10a, 10b, die Möglichkeit, die beiden mittels des ersten Ventilelements 9a verschließbaren Fluiddurchlässe 4a, 4b unabhängig von den beiden mittels des zweiten Ventilelements 9b verschließbaren Fluiddurchlässen 4c, 4d zu verschließen oder zum Durchströmen mit dem Kühlmittel freizugeben.

Zur Verdeutlichung des Aufbaus des Ventilkörpers 7 zeigt die Figur 3 diesen mit der Welle 8 und den zwei darauf angeordneten Ventilscheiben 10a, 10b in separater Darstellung und in einer perspektivischen Ansicht. Bevorzugt, da mit geringen Herstellungskosten verbunden, kann die Welle 8 aus einem Metall, insbesondere aus einem Stahl, hergestellt sein. Die beiden Ventilelemente 9a, 9b in Form der beiden Ventilscheiben 10a, 10b können aus einem Kunststoff hergestellt sein und mittels eines Spritzverfahrens an die Welle 8 angespritzt sein.

Wie die Figur 3 anschaulich belegt, kann in der ersten Ventilscheibe 10a ein erster Durchbruch 12a ausgebildet sein, welcher die erste Ventilscheibe 10a in der axialen Richtung durchsetzt. Der erste Durchbruch 12a ist dabei derart ausgebildet bzw. in der ersten Ventilscheibe 10a positioniert, dass er den ersten Fluideinlass 5a und den zweiten Fluideinlass 5b (vgl. hierzu Fig. 2) in Abhängigkeit von der momentan eingestellten Drehposition der Welle 8 verschließt oder zum Durchströmen mit dem Kühlmittel freigibt. Auch in der zweiten Ventilscheibe 10b kann wie in den Figuren 2 und 3 gezeigt ein zweiter Durchbruch 12b ausgebildet sein, welcher die zweite Ventilscheibe 10b in der axialen Richtung A durchsetzt. Der zweite Durchbruch 12b ist dabei derart ausgebildet bzw. in der zweiten Ventilscheibe 10b positioniert, dass erden ersten und/oder den zweiten Fluiddurchlass in Abhängigkeit von der momentan eingestellten Drehposition der Welle verschließt oder zum Durchströmen mit dem Fluid freigibt.

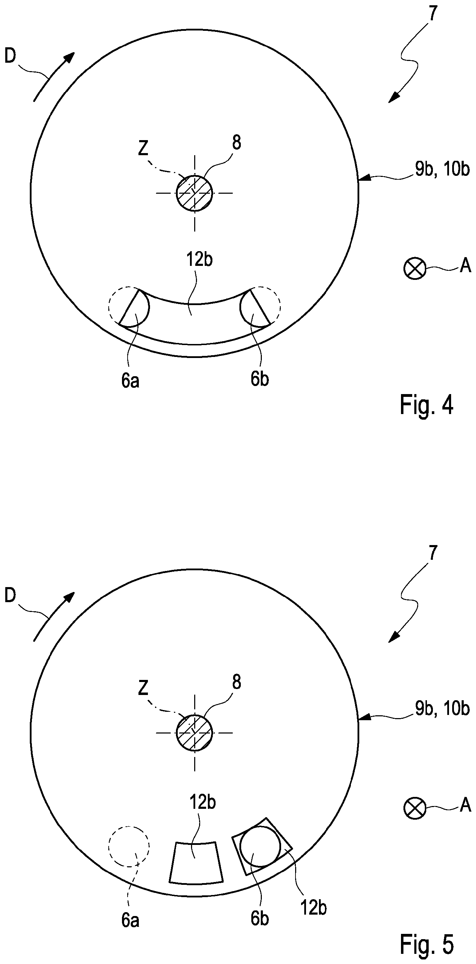

Im Beispielszenario weisen der erste und der zweite Durchbruch 12a, 12b in einer Draufsicht auf die erste bzw. zweite Ventilscheibe 10a, 10b in axialer Richtung A - die Figur 4 zeigt die zweite Ventilscheibe 10b in einem Querschnitt entlang der Schnittlinie IV-IV der Figur 2 - die Geometrie eines Ringsegments auf. Auf diese Weise kann ein gleichmäßiger Verschlussvorgang der beiden Fluidauslässe 6a, 6b mittels einer Drehbewegung der Welle 8 in Drehrichtung D bewirkt werden. Unter "gleichmäßig" wird vorliegend verstanden, dass der von der Ventilscheibe 10b abgedeckte Öffnungsquerschnitt der beiden Fluidauslässe 6a, 6b durch Drehen der Welle 8 gleichmäßig vom Drehwinkel der Drehwelle 8 abhängt. Vorangehende Erklärungen zur zweiten Ventilscheibe 10b und zum in dieser ausgebildeten zweiten Durchbruch 12b gelten mutatis mutandis selbstverständlich auch für die erste Ventilscheibe 10a und den ersten Durchbruch 12a.

In Varianten des Beispiels der Figuren 1 bis 4 können in der ersten und/oder zweiten Ventilscheibe 10a, 10b jeweils auch zwei oder mehr Durchbrüche 12a, 12b vorgesehen sein, die entlang der Drehrichtung D im Abstand zueinander in der ersten Ventilscheibe 10a bzw. 10b angeordnet sind. Somit können die Durchbrüche 12a, 12b bei geeigneter Anordnung der jeweiligen Fluideinlässe 5a, 5b bzw. Fluidauslässe 6a, 6b relativ zur ersten bzw. zweiten Ventilscheibe 10a, 10b und zu den in der Ventilscheibe 10a, 10b vorgesehenen wenigstens zwei Durchbrüchen 12a, 12b individuell den jeweiligen Fluideinlässen 5a, 5b bzw. Fluidauslässen 6a, 6b zugeordnet werden. Ein solches Szenario ist - abermals exemplarisch für die zweite Ventilscheibe 10b - anhand der Figur 5 gezeigt: Diese zeigt die Ventilscheibe 10b in einer Draufsicht in axialer Richtung A. Man erkennt, dass in der Ventilscheibe 10b zwei jeweils ringsegmentartig ausgebildete zweite Durchbrüche 12b vorgesehen sind, die entlang der Drehrichtung im Abstand zueinander angeordnet sind. Einer der beiden Durchbrüche dient zum Freigeben des ersten Fluidauslasses 6a, der andere zum Freigeben des zweiten Fluidauslasses 6b zum Durchströmen mit dem Kühlmittel. Vorangehende Erklärungen zur zweiten Ventilscheibe 10b und zu den in dieser ausgebildeten zweiten Durchbrüche 12b gelten mutatis mutandis auch für die erste Ventilscheibe 10a und die beiden Fluideinlässe 5a, 5b (nicht gezeigt). Es versteht sich, dass in den beiden Ventilscheiben 10a, 10b auch eine andere Anzahl von ersten bzw. zweiten Durchbrüchen 12a, 12b vorgesehen sein kann.

Im Beispielszenario der Figuren ist die Ventileinrichtung 1 derart ausgebildet, dass in einer ersten Drehposition der Welle 8 die beiden Fluideinlässe 5a, 5b und die beiden Fluidauslässe 6a, 6b, also alle vier Fluiddurchlässe 4a-4d, von der ersten bzw. zweiten Ventilscheibe 10a, 10b fluiddicht verschlossen sind. In diesem Fall kann kein Kühlmittel durch den Kühlmittelkreislauf 21 strömen. Die erste Drehposition dient also dazu, das Kühlsystem 20 zu deaktivieren, was erforderlich sein kann, wenn die Brennkraftmaschine 23 in einem Warmlaufbetrieb betrieben werden soll, in welchem sie noch nicht die nominelle Betriebstemperatur erreicht hat. Demgegenüber ist in diesem Szenario in einer zweiten Drehposition der Welle 8 der erste Fluideinlass 5a, insbesondere vollständig, zum Durchströmen mit dem Kühlmittel geöffnet und der zweite Fluideinlass 5b verschlossen. Weiterhin ist in besagter zweiter Drehposition der erste Fluidauslass 6a verschlossen und der zweite Fluidauslass 6b freigegeben. In der zweiten Drehposition wird also nur durch den Zylinderblock-Teilkreislauf 25 und den Kühler-Teilkreislauf 31 Kühlmittel gefördert. Auch dieser Betriebszustand des Kühlsystems 20 mag zum Warmlaufen der Brennkraftmaschine 23 Anwendung finden.

In einer dritten Drehposition sind die beiden Fluideinlässe 5a, 5b zum Durchströmen mit dem Kühlmittel freigegeben und wenigstens einer der beiden Fluidauslässe 6a, 6bist wenigstens teilweise zum Durchströmen mit dem Kühlmittel freigegeben. Die dritte Drehposition entspricht einem Kühlbetrieb des mit variabler Kühlleistung, die vom Öffnungsgrad der beiden Fluidauslässe 6a, 6b abhängt. Je größer der Öffnungsgrad des ersten Fluidauslasses 6a, der über den Kühler-Teilkreislauf 31 fluidisch mit dem Kühler 27 kommuniziert, desto größer die vom Kühlsystem bereitgestellte Kühlleistung. In einer vierten Drehposition sind die beiden Fluideinlässe 5a, 5b und der erste Fluidauslass 6a, insbesondere vollständig, zum Durchströmen mit dem Kühlmittel freigegeben sind, und der zweite Fluidauslass 6b ist geschlossen. Die vierte Drehposition entspricht einem Kühlbetrieb des Kühlsystems 20 mit maximaler Kühlleistung, die sowohl dem wenigsten einen Zylinderblock als auch dem wenigstens einen Zylinderkopf der Brennkraftmaschine 23 zur Verfügung gestellt wird. Die vorgenannten Eigenschaften der Ventileinrichtung 1 lassen sich konstruktiv erreichen, indem die Ventilelemente 9a, 9b mit einer geeigneten Geometrie versehen werden, so dass sie je nach Drehposition die betreffenden Fluiddurchlässe 4a-4d, etwa durch Abdecken, vollständig verschließen oder zum Durchströmen mit dem Kühlmittel freigeben.

Die Ventileinrichtung 1 mit den Fluiddurchlässen 4a-d, mit den Ventilscheiben 10a, 10b und mit den Durchbrüchen 12a, 12b kann insbesondere derart ausgebildet sein, dass durch ein Drehverstellen der Welle zwischen der dritten und der vierten Drehposition entlang der Drehrichtung D ein Verschlussgrad des ersten Fluidauslasses 6a durch das zweite Ventilelement 9b graduell zunimmt und ein Verschlussgrad des zweiten Fluidauslasses 6b durch das zweite Ventilelement 9b graduell abnimmt oder umgekehrt. Da auf diese Weise gesteuert werden kann, welcher Bruchteil des Kühlmittelstroms durch den Kühler-Teilkreislauf 31 und welcher durch den Kurzschluss-Teilkreislauf 30 strömen soll, kann auf diese Weise die vom Kühlsystem 20 bereitgestellte Kühlleistung stufenlos eingestellt werden.

Es versteht sich, dass die Welle 8 zusätzlich zu den oben erläuterten vier Drehpositionen in eine Vielzahl von Zwischenpositionen verstellt werden kann, die folglich von den vier Drehpositionen verschieden sind und in welchen wenigstens einer der Fluiddurchlässe 4a-4d vom ersten oder zweiten Ventilelement 9a, 9b in Form der beiden Ventilscheiben 10a, 10b teilweise verschlossen wird.

Auf den Stirn- und/oder Umfangsseiten wenigstens einer der beiden Ventilscheiben 10a, 10b kann eine Beschichtung aus einem reibungsmindernden Material (in den Figuren der Übersichtlichkeit halber nicht gezeigt) aufgebracht sein. Auf diese Weise können beim Drehen der Ventilscheiben 10a, 10b auftretende Verschleiß-effekte minimiert werden.

In einer Variante des Beispiels kann wenigstens eines der beiden Ventilelemente 9a, 9b - vorzugsweise gilt dies für beide Ventilelemente 9a, 9b - entlang der axialen Richtung A bewegbar an der Welle 8 angeordnet sein. In dieser Variante umfasst die Ventileinrichtung 1 eine in Figur 2 nur schematisch angedeutete Vorspanneinrichtung 19, welche, insbesondere mittels federelastischer Elemente 19a, 19b, das erste und/oder das zweite Ventilelement 9a, 9b zur jeweils benachbarten Stirnwand 2a, 2b des Gehäuses 2 hin vorspannt. Auf diese Weise können die Fluiddurchlässe 4a-4d abgedichtet werden, indem die Ventilelemente 9a, 9b in Form der beiden Ventilscheiben 10a, 10b gegen die Stirnwände 2a, 2b des Gehäuses 2 gedrückt werden.

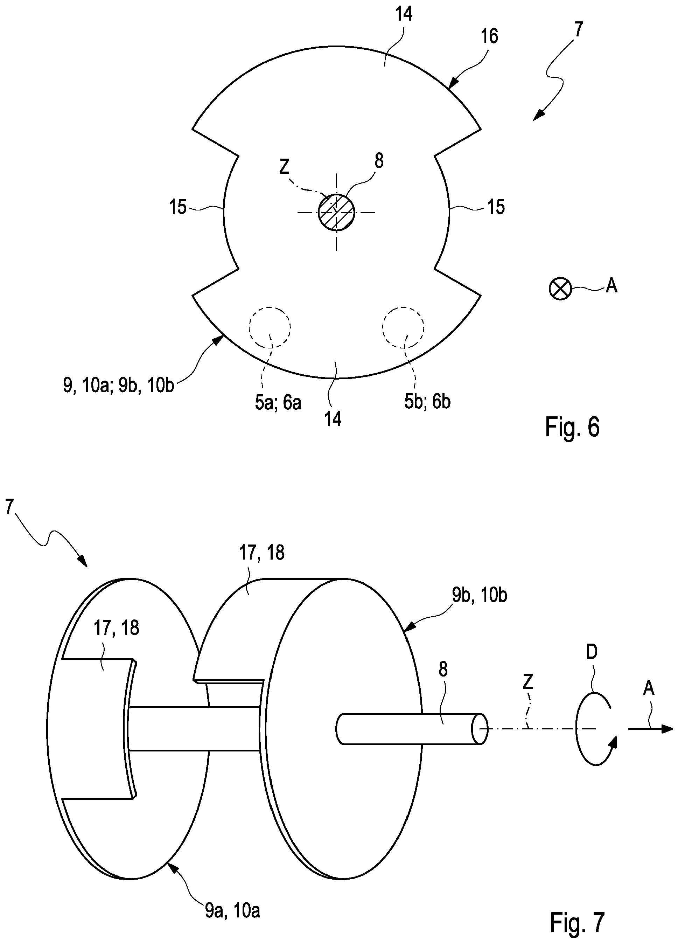

In einer in der Figur 6 gezeigten Variante des Beispiels der Figuren 4 und 5 kann die erste und/oder zweite Ventilscheibe 10a, 10b eine unrunde Randkontur 16 und wenigstens einen radial nach außen, von der Drehachse Z der Welle 8 weg abstehenden Fortsatz 14 - im Beispiel der Figur 6 sind exemplarisch zwei solche Fortsätze 14 gezeigt - aufweisen. Die beiden Fortsätze 14 können in Abhängigkeit von der Drehposition der Welle 8 die beiden Fluideinlässe 5a, 5b bzw. die beiden Fluidauslässe 6a, 6b verschließen. In der in Figur 6 gezeigten Verstellposition der Welle 8 und somit der beiden Ventilscheiben 10a, 10b sind die Fluideinlässe 5a, 5b bzw. die beiden Fluidauslässe 6a, 6b von den Fortsätzen 14 verdeckt und somit verschlossen. Durch eine Drehbewegung der Welle 8 und, damit verbunden, der ersten bzw. zweiten Ventilscheibe 10a, 10b werden die beiden, in Drehrichtung D zwischen den Fortsätzen 14 gebildeten Ausnehmungen 15 über die Fluideinlässe 5a, 5b bzw. Fluidauslässe 6a, 6b bewegt und somit freigegeben. Mit anderen Worten, bei dieser Variante werden die Durchbrüche 12a, 12b durch die zwischen den Fortsätzen 14 gebildeten Ausnehmungen 15 ersetzt. In diesem Szenario wechseln sich also entlang der Drehrichtung D wenigstens ein Fortsatz 14 und eine Ausnehmung 15 ab. Selbstverständlich kann diese Variante auch mit der oben erläuterten Variante mit Durchbrüchen 12a, 12b zu kombinieren. Denkbar ist etwa, in der ersten und/oder zweiten Ventilscheibe 10a, 10b sowohl Fortsätze 14 als auch Durchbrüche 12a, 12b bereitzustellen. Denkbar ist auch, eine der beiden Ventilscheiben 12a, 12b mit wenigstens einem Fortsatz 14 auszugestalten, die andere Ventilscheibe 12b, 12 hingegen mit wenigstens einem oben erläuterten Durchbruch 12a, 12b. Dem Fachmann eröffnen sich vielfältige Kombinations- und Realisierungsmöglichkeiten, unter welchen er unter anwendungsspezifischen Gesichtspunkten auszuwählen vermag.

In einer weiteren, in der Figur 7 gezeigten Variante des Beispiels der Figuren 4 bis 6 kann das Verschließen der Fluiddurchlässe 4a-4d mit Hilfe wenigstens einer an den Ventilkörpern 9a, 9b / den Ventilscheiben 10a, 10b vorgesehenen Kulisse 18 erfolgen. Die Ausbildung der Ventilelemente 9a, 9b bzw. der Ventilscheiben 10a, 10b mit Kulissen 18 zum Verschließen der im zylindrischen Gehäuse 2 vorgesehenen Fluiddurchlässe 4a-4d bietet sich insbesondere dann an, wenn die Fluiddurchlässe 4a-4d in einer Umfangswand des zylindrischen Gehäuses 2 angeordnet sind (in den Figuren nicht gezeigt). Im Beispiel der Figur 7 ist für jede der beiden Ventilscheiben 10a, 10b jeweils eine Kulisse 18 gezeigt, die in Form eines Umfangswand-Abschnitts 17 realisiert ist, der in bzw. entgegen der axialen Richtung A von der jeweiligen Ventilscheibe 10a, 10b weg absteht. Dieser Umfangswand-Abschnitt 17 dient dazu, die Fluiddurchlässe 4a-4d, also die Fluideinlässe 5a,5b oder die Fluidauslässe 6a, 6b abzudecken, wenn diese verschlossen werden sollen. Durch eine Drehbewegung der Welle 8 und somit der Ventilscheiben 10a, 10b entlang der Drehrichtung D werden die abgedeckten Fluiddurchlässe 4a-4d - bei geeigneter Dimensionierung der Umfangswand-Abschnitte 17 bzw. der Kulissen 18 wieder freigegeben, so dass das Kühlmittel durch diese hindurchströmen kann.

Es versteht sich, dass auch die in Figur 7 erläuterte Variante mit den Varianten der Figur 3 - Durchbrüche 12a, 12b in den Ventilscheiben 10a, 10b - und der Variante der Figur 6 - unrunde Randkontur der Ventilscheiben 10a, 10b mit sich daraus ergebenden radialen Fortsätzen 16 - kombiniert werden kann.

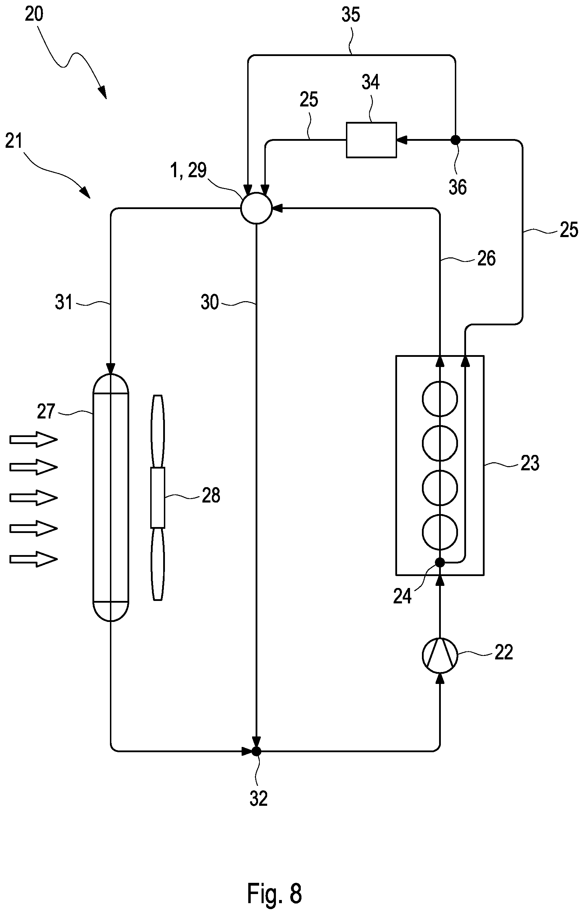

In Figur 8 ist eine weiterbildende Variante des Kühlmittelkreislaufs der Figur 1 gezeigt. In dieser Variante ist im Zylinderblock-Teilkreislauf 25 ein Thermostatventil 34 angeordnet, und zwar stromab der Brennkraftmaschine 23 und stromauf der Ventileinrichtung 1. Das Thermostatventil 34 dient zum Regeln des Kühlmittelstroms durch den Zylinderblock-Teilkreislauf 25. Das Thermostatventil 34 kann ein Wachs umfassen, dessen Volumenausdehnung mit zunehmender Temperatur ansteigt und mit fallender Temperatur abnimmt. Auf diese Weise kann der Öffnungsquerschnitt des Thermostatventils 34 und somit die durch das Thermostatventil hindurchströmende Kühlmittelmenge pro Zeiteinheit selbstregulierend in Abhängigkeit von der Kühlmitteltemperatur des Kühlmittels nach Aufnahme von Abwärme aus der Brennkraftmaschine 23 eingestellt werden.

Darüber hinaus ist im Zylinderblock-Teilkreislauf 25 auch ein Thermostat-Bypass-Teilkreislauf 35 vorgesehen, der das Thermostatventil 34 fluidisch umgeht. Der Thermostat-Bypass-Teilkreislauf 35 zweigt in einem Abzweigpunkt 36 vom Zylinderblock-Teilkreislauf 25 ab und mündet in der Ventileinrichtung 1. Hierzu ist im Gehäuse 2 der Ventileinrichtung 1 ein zusätzlicher, fünfter Fluiddurchlass (in den Figuren 2 bis 7 nicht gezeigt) vorgesehen, der fluidisch mit dem Thermostat-Bypass-Teilkreislauf 35 kommuniziert. Beim fünften Fluiddurchlass handelt es sich um einen dritten Fluideinlass, durch welchen das Kühlmittel in den Gehäuseinnenraum 3 der Ventileinrichtung 1 eintreten kann (in den Figuren nicht gezeigt).

Der Thermostat-Bypass-Teilkreislauf 35 dient dazu, das Kühlmittel am Thermostatventil 34 vorbeizuleiten, wenn dieses noch nicht die zum Öffnen des Thermostatventils 34 erforderliche Mindesttemperatur aufweist, obwohl die Brennkraftmaschine 23 im Bereich des Zylinderblocks bereits eine erhebliche Menge an Abwärme produziert bzw. eine bauteil-kritische Temperatur erreicht.

Hinsichtlich des in der Ventileinrichtung 1 vorgesehenen fünften Fluiddurchlasses, welcher durch eines der beiden Ventilelemente 9a, 9b wahlweise verschlossen oder zum Durchströmen mit dem Kühlmittel freigegeben werden kann, gelten alle hinsichtlich der konstruktiven Realisierung alle Erläuterungen im Zusammenhang mit den vier Fluiddurchlässen 4a-4d im Zusammenhang mit den Figuren 2 bis 7 mutatis mutandis. Die Ventileinrichtung 1 erlaubt auch im Kühlmittelkreislauf 21 gemäß Figur 8 eine präzise Steuerung der Verteilung des Kühlmittelstroms auf die fünf Teil-Kreisläufe 25, 26, 30, 31, 35 des Kühlmittelkreislaufs, insbesondere in Abhängigkeit von verschiedenen Betriebszuständen der Brennkraftmaschine.

## Patentansprüche

1. Ventileinrichtung (1), zum Einstellen eines Kühlmittelstroms in einem Kühlsystem für eine Brennkraftmaschine eines Kraftfahrzeugs,
- mit einem einen Gehäuseinnenraum (3) begrenzenden Gehäuse (2), in welchem wenigstens ein erster, ein zweiter, ein dritter und ein vierter Fluiddurchlass (4a-4d), jeweils zum Durchströmen mit einem Fluid, vorgesehen sind,
- mit einem im Gehäuseinnenraum (3) angeordneten Ventilkörper (7), der eine Welle (8) umfasst, die relativ zum Gehäuse (2) entlang einer Drehrichtung (D) drehverstellbar ist, **dadurch gekennzeichnet, dass**
- auf der Welle (8) jeweils drehfest und im Abstand zueinander ein erstes und ein zweites Ventilelement (9a, 9b) angeordnet sind, welche derart ausgebildet sind, dass in Abhängigkeit von der eingestellten Drehposition der Welle (8) jeder der vier Fluiddurchlässe (4a-4d) jeweils wenigstens teilweise zum Durchströmen mit dem Fluid freigegeben oder von einem der beiden Ventilkörper (9a, 9b) verschlossen ist,
- der erste Fluiddurchlass (4a) als erster Fluideinlass (5a) und der zweite Fluiddurchlass (4b) als zweiter Fluideinlass (5b), jeweils zum Einleiten des Fluids in den Gehäuseinnenraum (3), ausgebildet ist,
- der dritte Fluiddurchlass (4c) als erster Fluidauslass (6a) und der vierte Fluiddurchlass (4d) als zweiter Fluidauslass (6b), jeweils zum Ausleiten des Fluids aus dem Gehäuseinnenraum (3), ausgebildet ist,
- in einer vorbestimmten ersten Drehposition alle vier Fluiddurchlässe (4a-4d) jeweils entweder vom ersten oder zweiten Ventilkörper (9a, 9b) verschlossen sind,
- in einer vorbestimmten zweiten Drehposition der zweite Fluideinlass (5b) verschlossen und der erste Fluideinlass (5a) zum Durchströmen mit dem Fluid freigegeben ist und dass der erste Fluidauslass (6a) verschlossen und der zweite Fluidauslass (6b) zum Durchströmen mit dem Fluid freigegeben ist,
- in einer vorbestimmten dritten Drehposition die beiden Fluideinlässe (5a, 5b) zum Durchströmen mit dem Fluid freigegeben sind und wenigstens einer der beiden Fluidauslässe (6a, 6b) wenigstens teilweise zum Durchströmen mit dem Fluid freigegeben ist,
- in einer vorbestimmten vierten Drehposition die beiden Fluideinlässe (5a, 5b) und der erste Fluidauslass (6a) zum Durchströmen mit dem Fluid freigegeben sind und der zweite Fluidauslass (6b) geschlossen ist.

2. Ventileinrichtung nach Anspruch 1,
**dadurch gekennzeichnet, dass**
die Ventileinrichtung (1) derart ausgebildet ist, dass durch ein Drehverstellen der Welle (8) zwischen der dritten und der vierten Drehposition entlang der Drehrichtung (D) ein Verschlussgrad des ersten Fluidauslasses (6a) durch das zweite Ventilelement (9b) graduell zunimmt und ein Verschlussgrad des zweiten Fluidauslasses (6b) durch das zweite Ventilelement (9b) graduell abnimmt oder umgekehrt.

3. Ventileinrichtung nach einem der vorhergehenden Ansprüche,
**dadurch gekennzeichnet, dass**
- das erste Ventilelement (9a) als erste Ventilscheibe (10a) ausgebildet ist, die drehfest an der Welle (8) angeordnet ist, und/oder dass
- das zweite Ventilelement (9b) als zweite Ventilscheibe (10b) ausgebildet ist, die entlang einer axialen Richtung (A), die durch eine Drehachse (Z) der Welle (8) definiert ist, im Abstand zur ersten Ventilscheibe (10a) drehfest an der Welle (8) angeordnet ist.

4. Ventileinrichtung nach Anspruch 3,
**dadurch gekennzeichnet, dass**
- in der ersten Ventilscheibe (10a) wenigstens ein erster Durchbruch (12a) ausgebildet ist, welcher die erste Ventilscheibe (10a) in der axialen Richtung (A) durchsetzt, so dass der erste Durchbruch (12a) den ersten und/oder zweiten Fluiddurchlass (4a, 4b) in Abhängigkeit von der Drehposition der Welle (8) verschließt oder zum Durchströmen mit dem Fluid freigibt, und/oder dass
- in der zweiten Ventilscheibe (10b) wenigstens ein zweiter Durchbruch (12b) ausgebildet ist, welcher die Ventilscheibe (10b) in der axialen Richtung (A) durchsetzt, so dass der zweite Durchbruch (12b) den dritten und/oder vierten Fluiddurchlass (4c, 4d) in Abhängigkeit von der Drehposition der Welle (8) verschließt oder zum Durchströmen mit dem Fluid freigibt.

5. Ventileinrichtung nach Anspruch 3 oder 4,
**dadurch gekennzeichnet, dass**
- in der ersten Ventilscheibe (10a) genau zwei erste Durchbrüche (12a) vorgesehen sind, die entlang der Drehrichtung (D) im Abstand zueinander in der ersten Ventilscheibe (10a) angeordnet sind, und/oder dass
- in der zweiten Ventilscheibe (10b) genau zwei zweite Durchbrüche (12b) vorgesehen sind, die entlang der Drehrichtung (D) im Abstand zueinander in der zweiten Ventilscheibe (10b) angeordnet sind.

6. Ventileinrichtung nach Anspruch 4 oder 5,
**dadurch gekennzeichnet, dass**
der erste und/oder zweite Durchbruch (12a, 12b) in einer Draufsicht auf die erste oder zweite Ventilscheibe (10a, 10b) in axialer Richtung (A) jeweils die Geometrie eines Ringsegments aufweist.

7. Ventileinrichtung nach einem der Ansprüche 3 bis 6,
**dadurch gekennzeichnet, dass**
- das erste Ventilelement (9a), insbesondere die erste Ventilscheibe (10a), wenigstens einen Umfangswand-Abschnitt (17) umfasst, welcher den ersten und/oder zweiten Fluiddurchlass (4a, 4b) in Abhängigkeit von der Drehposition der Welle in der Drehrichtung (D) verschließt oder zum Durchströmen mit dem Fluid freigibt, und/oder dass
- das zweite Ventilelement (9b), insbesondere die zweite Ventilscheibe (10b), wenigstens einen Umfangswand-Abschnitt (17) umfasst, welcher den dritten und/oder vierten Fluiddurchlass (4c, 4d) in Abhängigkeit von der in der Welle (8) eingestellten Drehposition verschließt oder zum Durchströmen mit dem Fluid freigibt.

8. Ventileinrichtung nach einem der vorhergehenden Ansprüche,
**dadurch gekennzeichnet, dass**
- die erste Ventilscheibe (10a) in einer Draufsicht in der axialen Richtung (A) eine unrunde Randkontur (16) besitzt und wenigstens einen radial nach außen, von der Drehachse (Z) der Welle (8) abstehenden ersten Fortsatz (14) aufweist, welcher den ersten und/oder zweiten Fluiddurchlass (4a, 4b) in Abhängigkeit von der Drehposition der Welle (8) verschließt oder zum Durchströmen mit dem Fluid freigibt,
- die zweite Ventilscheibe (10b) in einer Draufsicht in der axialen Richtung (A) eine unrunde Randkontur (16) besitzt und wenigstens einen radial nach außen, von der Drehachse der Welle (8) abstehenden Fortsatz (14) aufweist, welcher den dritten und/oder vierten Fluiddurchlass (4c, 4d) in Abhängigkeit von der Drehposition der Welle (8) verschließt oder zum Durchströmen mit dem Fluid freigibt.

9. Ventileinrichtung nach einem der vorhergehenden Ansprüche,
**dadurch gekennzeichnet, dass**
die Ventileinrichtung (1) eine mit der Welle antriebsverbundene Antriebseinheit (13), insbesondere einen Elektromotor, zum Drehverstellen der Welle (8) zwischen den Drehpositionen umfasst.

10. Ventileinrichtung nach Anspruch 9,
**dadurch gekennzeichnet, dass**
- die Welle (8) einen ersten axialen Wellenabschnitt, an welchem drehfest das erste Ventilelement (9a) angeordnet ist, und einen relativ zum ersten Wellenabschnitt drehverstellbaren zweiten axialen Wellenabschnitt umfasst, an welchem drehfest das zweite Ventilelement (9b) angeordnet ist,
- der erste axiale Wellenabschnitt mit einer ersten Antriebseinheit und der zweite Wellenabschnitt mit einer von der ersten Antriebseinheit verschiedenen zweiten Antriebseinheit antriebsverbunden sind.

11. Ventileinrichtung nach einem der vorhergehenden Ansprüche,
**dadurch gekennzeichnet, dass**
- die Welle (8) aus einem Metall, insbesondere aus Stahl, hergestellt ist,
- wenigstens eines der Ventilelemente (9a, 9b) aus einem an die Welle (8) angespritzten Kunststoff hergestellt ist.

12. Ventileinrichtung nach einem der Ansprüche 3 bis 11,
**dadurch gekennzeichnet, dass**
auf den Stirn- und/oder Umfangsseiten wenigstens einer der beiden Ventilscheiben (10a, 10b) eine Beschichtung aus einem reibungsmindernden Material vorgesehen ist.

13. Ventileinrichtung nach einem der Ansprüche 3 bis 12,
**dadurch gekennzeichnet, dass**
- wenigstens eines der beiden Ventilelemente (9a, 9b), vorzugsweise beide Ventilelemente (9a, 9b), entlang der axialen Richtung (A) bewegbar an der Welle (8) angeordnet ist/sind,
- die Ventileinrichtung (1) eine Vorspanneinrichtung (19) umfasst, welche das erste und/oder das zweite Ventilelement (9a, 9b) zur jeweils benachbarten Stirnwand (2a, 2b) des Gehäuses (2) hin vorspannt.

14. Kühlsystem (20) für eine Brennkraftmaschine (23), insbesondere eines Kraftfahrzeugs, mit wenigstens einem Zylinderkopf und wenigstens einem Zylinderblock,
- mit einem Kühlmittelkreislauf (21) zum Zirkulieren eines Kühlmittels, umfassend:
- eine Ventileinrichtung (1) nach einem der vorhergehenden Ansprüche,
- wobei der erste Fluiddurchlass (4a) der Ventileinrichtung (1), insbesondere der erste Fluideinlass (5a), fluidisch mit einem Zylinderblock-Teilkreislauf (25) des Kühlmittelkreislaufs (21) und der zweite Fluiddurchlass (4b), insbesondere der zweite Fluideinlass (5b), fluidisch mit einem Zylinderkopf-Teilkreislauf (26) des Kühlmittelkreislaufs (21) kommuniziert, wobei der Zylinderkopf-Teilkreislauf (26) thermisch an den wenigstens einen Zylinderkopf der Brennkraftmaschine (23) gekoppelt ist und der Zylinderblock-Teilkreislauf thermisch an den wenigstens einen Zylinderblock der Brennkraftmaschine (23) gekoppelt ist,
- wobei der dritte Fluiddurchlass (4c), insbesondere der erste Fluidauslass (6a), fluidisch mit einem Kurzschluss-Teilkreislauf (30) des Kühlmittelkreislaufs (21) kommuniziert und der vierte Fluiddurchlass (4d), insbesondere der zweite Fluidauslass (6b), fluidisch mit einem Kühler-Teilkreislauf (31) des Kühlmittelkreislaufs (21) kommuniziert,
- wobei der Kurzschluss-Teilkreislauf (30) fluidisch parallel zum Kühler-Teilkreislauf (31) geschaltet ist und stromab eines im Kühler-Teilkreislauf (31) angeordneten Kühlers (27) in einem Abzweigpunkt (32) wieder in den Kühler-Teilkreislauf (31) mündet,
- wobei der Kühler-Teilkreislauf (31) im Abzweigpunkt (32) in den Zylinderkopf-Teilkreislauf (26) übergeht,
- wobei der Zylinderblock-Teilkreislauf (25) in einem stromab des Abzweigpunkts (32) angeordneten weiteren Abzweigpunkt (24) vom Zylinderkopf-Teilkreislauf (26) abzweigt und in der Ventileinrichtung (1) mündet.

15. Kühlsystem (20) nach Anspruch 14,
**dadurch gekennzeichnet, dass**
- im Zylinderblock-Teilkreislauf (25) stromab der Brennkraftmaschine (23) und stromauf der Ventileinrichtung (1) ein Thermostatventil (34) angeordnet ist,
- in einem Abzweigpunkt (36) stromauf des Thermostatventils (34) ein Thermostat-Bypass-Teilkreislauf (35) vom Zylinderblock-Teilkreislauf (25) abzweigt, der den Thermostaten (34) fluidisch umgeht und in der Ventileinrichtung (1) mündet.

16. Kühlsystem nach Anspruch 15,
**dadurch gekennzeichnet, dass**
im Gehäuse (2) der Ventileinrichtung (1) genau fünf Fluiddurchlässe (4a-4d) vorgesehen sind, die jeweils von einem der beiden Ventilelemente (9a, 9b) verschließbar oder zum Durchströmen mit dem Fluid freigebbar sind,
- der fünfte Fluiddurchlass als dritter Fluideinlass ausgebildet ist, welcher fluidisch mit dem Thermostat-Bypass-Teilkreislauf (35) kommuniziert.

## Claims

1. Valve device (1) for adjusting a coolant flow in a cooling system for an internal combustion engine of a motor vehicle,
- having a housing (2) delimiting a housing interior (3) in which at least one first, one second, one third and one fourth fluid port (4a-4d) are respectively provided for a fluid to flow through,
- having a valve body (7) arranged in the housing interior (3) which has a shaft (8) which is rotationally adjustable relative to the housing (2) along a direction of rotation (D),
**characterised in that**
- a first and a second valve element (9a, 9b) are arranged on the shaft (8) respectively in a torque-proof manner and at a distance to each other which are formed in such a way that each of the four fluid ports (4a-4d) is respectively unlocked at least partially for the fluid to flow through or is closed by one of the two valve bodies (9a, 9b) as a function of the adjusted rotational position of the shaft (8),
- the first fluid port (4a) is configured as the first fluid inlet (5a) and the second fluid port (4b) is configured as the second fluid inlet (5b), respectively for introducing the fluid into the housing interior (3),
- wherein the third fluid port (4c) is configured as the first fluid outlet (6a) and the fourth fluid port (4d) is configured as the second fluid outlet (6b), respectively for discharging the fluid out of the housing interior (3),
- in a predetermined first rotational position, all four fluid ports (4a-4d) are respectively closed either by the first or second valve body (9a, 9b),
- in a predetermined second rotational position, the second fluid inlet (5b) is closed and the first fluid inlet (5a) is unlocked for the fluid to flow through and **in that** the first fluid outlet (6a) is closed and the second fluid outlet (6b) is unlocked for the fluid to flow through,
- in a predetermined third rotational position, the two fluid inlets (5a, 5b) are unlocked for the fluid to flow through and at least one of the two fluid outlets (6a, 6b) is unlocked at least partially for the fluid to flow through,
- in a predetermined fourth rotational position, the two fluid inlets (5a, 5b) and the first fluid outlet (6a) are unlocked for the fluid to flow through and the second fluid outlet (6b) is closed.

2. Valve device according to claim 1,
**characterised in that**
the valve device (1) is configured in such a way that by rotationally adjusting the shaft (8) between the third and the fourth rotational position along the direction of rotation (D), a degree of closure of the first fluid outlet (6a) by way of the second valve element (9b) gradually increases and a degree of closure of the second fluid outlet (6b) by way of the second valve element (9b) gradually decreases or vice versa.

3. Valve device according to any one of the preceding claims, **characterised in that**
- the first valve element (9a) is configured as the first valve disc (10a) which is arranged in a torque-proof manner on the shaft (8), and/or **in that**
- the second valve element (9b) is configured as the second valve disc (10b), which is arranged in a torque-proof manner on the shaft (8) at a distance to the first valve disc (10a) along an axial direction (A), which is defined by an axis of rotation (Z) of the shaft (8).

4. Valve device according to claim 3,
**characterised in that**
- at least one first through-hole (12a) is arranged in the first valve disc (10a) which pushes the first valve disc (10a) in the axial direction (A) such that the first through-hole (12a) seals the first and/or second fluid port (4a, 4b) as a function of the rotational position of the shaft (8) or unlocks them for the fluid to flow through and/or **in that**
- at least one second through-hole (12b) is configured in the second valve disc (10b) which pushes the valve disc (10b) in the axial direction (A) such that the second through-hole (12b) seals the third and/or fourth fluid port (4c, 4d) as a function of the rotational position of the shaft (8) or unlocks them for the fluid to flow through.

5. Valve device according to claim 3 or 4, **characterised in that**
- precisely two first through-holes (12a) are provided in the first valve disc (10a) which are arranged at a distance to each other in the first valve disc (10a) along the direction of rotation (D) and/or **in that**
- precisely two second through-holes (12b) are provided in the second valve disc (10b) which are arranged at a distance to each other in the second valve disc (10b) along the direction of rotation (D).

6. Valve device according to claim 4 or 5,
**characterised in that**
the first and/or second through-hole (12a, 12b) respectively has the geometry of a ring segment in a plan view on the first or second valve disc (10a, 10b) in the axial direction (A).

7. Valve device according to any one of claims 3 to 6,
**characterised in that**
- the first valve element (9a), in particular the first valve disc (10a) has at least one circumferential wall section (17) which seals the first and/or second fluid port (4a, 4b) as a function of the rotational position of the shaft in the direction of rotation (D) or unlocks them for the fluid to flow through and/or **in that**
- the second valve element (9b), in particular the second valve disc (10b) has at least one circumferential wall section (17) which seals the third and/or fourth fluid port (4c, 4d) as a function of the rotational position adjusted in the shaft (8) or unlocks them for the fluid to flow through.

8. Valve device according to any one of the preceding claims,
**characterised in that**
- the first valve disc (10a) has an unrounded edge contour (16) in a plan view in the axial direction (A) and has at least one first projection (14) protruding radially outwards from the axis of rotation (Z) of the shaft (8) which seals the first and/or second fluid port (4a, 4b) as a function of the rotational position of the shaft (8) or unlocks them for the fluid to flow through,
- the second valve disc (10b) has an unrounded edge contour (16) in a plan view in the axial direction (A) and has at least one projection (14) protruding radially outwards from the axis of rotation of the shaft (8) which seals the third and/or fourth fluid port (4c, 4d) as a function of the rotational position of the shaft (8) or unlocks them for the fluid to flow through.

9. Valve device according to any one of the preceding claims,
**characterised in that**
the valve device (1) has a drive unit (13), in particular an electromotor drivingly connected to the shaft for rotationally adjusting the shaft (8) between the rotational positions.

10. Valve device according to claim 9,
**characterised in that**
- the shaft (8) has a first axial shaft section on which the first valve element (9a) is arranged in a torque-proof manner and a second axial shaft section that is rotationally-adjustable relative to the first shaft section, the second valve element (9b) is arranged on said second axial shaft section in a torque-proof manner,
- the first axial shaft section is drivingly connected to a first drive unit and the second shaft section is drivingly connected to a second drive unit different to the first drive unit.

11. Valve device according to any one of the preceding claims,
**characterised in that**
- the shaft (8) is manufactured from a metal, in particular from steel,
- at least one of the valve elements (9a, 9b) is manufactured from a plastic injected onto the shaft (8).

12. Valve device according to any one of claims 3 to 11,
**characterised in that**
a coating of a friction-reducing material is provided on the front and/or circumferential sides of at least one of the two valve discs (10a, 10b).

13. Valve device according to any one of claims 3 to 12,
**characterised in that**
- at least one of the two valve elements (9a, 9b), preferably both valve elements (9a, 9b) is/are arranged movable on the shaft (8) along the axial direction (A),
- the valve device (1) has a pretensioning device (19) which pretensions the first and/or the second valve element (9a, 9b) towards the respectively adjacent front wall (2a, 2b) of the housing (2).

14. Cooling system (20) for an internal combustion engine (23), in particular of a motor vehicle with at least one cylinder head and at least one cylinder block,
- with a coolant circuit (21) for circulating a coolant, comprising:
- a valve device (1) according to any one of the preceding claims,
- wherein the first fluid port (4a) of the valve device (1), in particular the first fluid inlet (5a), is in fluidic communication with a cylinder block partial circuit (25) of the coolant circuit (21) and the second fluid port (4b), in particular the second fluid inlet (5b), is in fluidic communication with a cylinder head partial circuit (26) of the coolant circuit (21), wherein the cylinder head partial circuit (26) is thermally coupled to the at least one cylinder head of the internal combustion engine (23) and the cylinder block partial circuit is thermally coupled to the at least one cylinder block of the internal combustion engine (23),
- wherein the third fluid port (4c), in particular the first fluid outlet (6a), is in fluidic communication with a short-circuit partial circuit (30) of the coolant circuit (21) and the fourth fluid port (4d), in particular the second fluid outlet (6b) is in fluidic communication with a cooler partial circuit (31) of the coolant circuit (21),
- wherein the short-circuit partial circuit (30) is fluidically connected parallel to the cooler partial circuit (31) and discharges once again into the cooler partial circuit (31) downstream of a cooler (27) arranged in the cooler partial circuit (31) in a branch point (32),
- wherein the cooler partial circuit (31) passes into the cylinder head partial circuit (26) in the branch point (32),
- wherein the cylinder block partial circuit (25) branches off from the cylinder head partial circuit (26) in an additional branch point (24) arranged downstream of the branch point (32) and discharges in the valve device (1).

15. Cooling system (20) according to claim 14,
**characterised in that**
- in the cylinder block partial circuit (25), a thermostat valve (34) is arranged downstream of the internal combustion engine (23) and upstream of the valve device (1),
- in a branch point (36), a thermostat bypass partial circuit (35) branches off from the cylinder block partial circuit (25) upstream of the thermostat valve (34), said cylinder block partial circuit fluidically bypasses the thermostats (34) and discharges in the valve device (1).

16. Cooling system according to claim 15,
**characterised in that**
precisely five fluid ports (4a-4d) are provided in the housing (2) of the valve device (1) which can be respectively sealed by one of the two valve elements (9a, 9b) or unlocked for the fluid to flow through,
- the fifth fluid port is configured as the third fluid inlet which is in fluidic communication with the thermostat bypass partial circuit (35).

## Revendications

1. Dispositif de soupape (1) servant à régler un flux de réfrigérant dans un système de refroidissement pour un moteur à combustion interne d'un véhicule automobile,
- avec un boîtier (2) délimitant un espace intérieur de boîtier (3), dans lequel au moins un premier, un deuxième, un troisième et un quatrième passage de fluide (4a - 4d) sont prévus respectivement afin d'être traversés par un flux de fluide,
- avec un corps de soupape (7) disposé dans l'espace intérieur de boîtier (3), comprenant un arbre (8), qui peut être ajusté en rotation par rapport au boîtier (2) le long d'une direction de rotation (D), **caractérisé en ce que**
- un premier élément de soupape et un second élément de soupape (9a, 9b) sont disposés sur l'arbre (8) respectivement de manière solidaire en rotation et à distance l'un de l'autre, lesquels éléments de soupape sont réalisés de telle manière qu'en fonction de la position de rotation réglée de l'arbre (8), chacun des quatre passages de fluide (4a - 4d) est dégagé respectivement au moins en partie afin de faire passer le flux de fluide ou est fermé par l'un des deux corps de soupape (9a, 9b),
- le premier passage de fluide (4a) est réalisé en tant qu'une première admission de fluide (5a) et le deuxième passage de fluide (4b) est réalisé en tant qu'une deuxième admission de fluide (5b) respectivement afin d'introduire le fluide dans l'espace intérieur de boîtier (3),
- dans lequel le troisième passage de fluide (4c) est réalisé en tant que première sortie de fluide (6a) et le quatrième passage de fluide (4d) est réalisé en tant que deuxième sortie de fluide (6b) respectivement afin d'évacuer le fluide hors de l'espace intérieur de boîtier (3),
- dans une première position de rotation prédéfinie l'ensemble des quatre passages de fluide (4a - 4d) sont respectivement fermés soit par le premier soit par le second corps de soupape (9a, 9b),
- dans une deuxième position de rotation prédéfinie la seconde admission de fluide (5b) est fermée et la première admission de fluide (5a) est dégagée afin de laisser passer le flux de fluide et la première sortie de fluide (6a) est fermée et la seconde sortie de fluide (6b) est dégagée afin de laisser passer le flux de fluide,
- dans une troisième position de rotation prédéfinie les deux admissions de fluide (5a, 5b) sont dégagées afin de laisser passer le flux de fluide et au moins une des deux sorties de fluide (6a, 6b) est dégagée au moins en partie afin de laisser passer le flux de fluide,
- dans une quatrième position de rotation prédéfinie les deux admissions de fluide (5a, 5b) et la première sortie de fluide (6a) sont dégagées afin de laisser passer le flux de fluide et la seconde sortie de fluide (6b) est fermée.

2. Dispositif de soupape selon la revendication 1,
**caractérisé en ce que**
le dispositif de soupape (1) est réalisé de telle manière qu'un degré de fermeture de la première sortie de fluide (6a) par le second élément de soupape (9b) augmente graduellement par un ajustement en rotation de l'arbre (8) entre la troisième et la quatrième position de rotation le long de la direction de rotation (D), et un degré de fermeture de la seconde sortie de fluide (6b) par le second élément de soupape (9b) diminue graduellement ou inversement.

3. Dispositif de soupape selon l'une quelconque des revendications précédentes,
**caractérisé en ce que**
- le premier élément de soupape (9a) est réalisé sous la forme d'un premier disque de soupape (10a), qui est disposé de manière solidaire en rotation au niveau de l'arbre (8), et/ou que
- le second élément de soupape (9b) est réalisé sous la forme d'un second disque de soupape (10b), qui est disposé le long d'une direction axiale (A), qui est définie par un axe de rotation (Z) de l'arbre (8), à distance du premier disque de soupape (10a) de manière solidaire en rotation au niveau de l'arbre (8).

4. Dispositif de soupape selon la revendication 3,
**caractérisé en ce que**
- au moins un premier percement (12a) est réalisé dans le premier disque de soupape (10a), lequel traverse le premier disque de soupape (10a) dans la direction axiale (A) de sorte que le premier percement (12a) ferme ou dégage afin de laisser passer le flux de fluide le premier et/ou le deuxième passage de fluide (4a, 4b) en fonction de la position de rotation de l'arbre (8), et/ou que
- au moins un deuxième percement (12b) est réalisé dans le second disque de soupape (10b), lequel traverse le disque de soupape (10b) dans la direction axiale (A) de sorte que le deuxième percement (12b) ferme ou dégage afin de laisser passer le flux de fluide le troisième et/ou le quatrième passage de fluide (4c, 4d) en fonction de la position de rotation de l'arbre (8).

5. Dispositif de soupape selon la revendication 3 ou 4,
**caractérisé en ce que**
- précisément deux premiers percements (12a) sont prévus dans le premier disque de soupape (10a), lesquels sont disposés le long de la direction de rotation (D) à distance l'un de l'autre dans le premier disque de soupape (10a), et/ou que
- précisément deux deuxièmes percements (12b) sont prévus dans le deuxième disque de soupape (10b), lesquels sont disposés le long de la direction de rotation (D) à distance l'un de l'autre dans le second disque de soupape (10b).

6. Dispositif de soupape selon la revendication 4 ou 5,
**caractérisé en ce que**
le premier et/ou le deuxième percement (12a, 12b) présente, dans une vue de dessus sur le premier ou le second disque de soupape (10a, 10b), dans une direction axiale (A), respectivement la géométrie d'un segment annulaire.

7. Dispositif de soupape selon l'une des revendications 3 à 6,
**caractérisé en ce que**
- le premier élément de soupape (9a), en particulier le premier disque de soupape (10a), comprend au moins une section de paroi périphérique (17), qui ferme ou dégage afin de laisser passer le flux de fluide le premier et/ou le deuxième passage (4a, 4b) en fonction de la position de rotation de l'arbre dans la direction de rotation (D), et/ou que
- le second élément de soupape (9b), en particulier le second disque de soupape (10b), comprend au moins une section de paroi périphérique (17), qui ferme ou dégage afin de laisser passer le flux de fluide le troisième et/ou le quatrième passage de fluide (4c, 4d) en fonction de la position de rotation réglée dans l'arbre (8).

8. Dispositif de soupape selon l'une quelconque des revendications précédentes,
**caractérisé en ce que**
- le premier disque de soupape (10a) possède dans une vue de dessus, dans la direction axiale (A), un contour de bord non rond et présente au moins un premier prolongement (14) dépassant radialement vers l'extérieur de l'axe de rotation (Z) de l'arbre (8), lequel prolongement ferme ou dégage afin de laisser passer le flux de fluide le premier et/ou le deuxième passage de fluide (4a, 4b) en fonction de la position de rotation de l'arbre (8),
- le second disque de soupape (10b) possède dans une vue de dessus dans la direction axiale (A) un contour de bord (16) non rond et présente au moins un prolongement (14) dépassant radialement vers l'extérieur de l'axe de rotation de l'arbre (8), lequel prolongement ferme ou dégage afin de laisser passer le flux de fluide le troisième et/ou le quatrième passage de fluide (4c, 4d) en fonction de la position de rotation de l'arbre (8).

9. Dispositif de soupape selon l'une quelconque des revendications précédentes,
**caractérisé en ce que**
le dispositif de soupape (1) comprend une unité d'entraînement (13) reliée en entraînement à l'arbre, en particulier un moteur électrique, servant à ajuster en rotation l'arbre (8) entre les positions de rotation.

10. Dispositif de soupape selon la revendication 9,
**caractérisé en ce que**
- l'arbre (8) comprend une première section d'arbre axiale, au niveau de laquelle est disposé de manière solidaire en rotation le premier élément de soupape (9a), et une deuxième section d'arbre axiale ajustable en rotation par rapport à la première section d'arbre, au niveau de laquelle est disposé de manière solidaire en rotation le second élément de soupape (9b),
- la première section d'arbre axiale est reliée en entraînement à une première unité d'entraînement et la deuxième section d'arbre est reliée à une deuxième unité d'entraînement différente de la première unité d'entraînement.

11. Dispositif de soupape selon l'une quelconque des revendications précédentes,
**caractérisé en ce que**
- l'arbre (8) est fabriqué à partir d'un métal, en particulier à partir d'acier,
- au moins un des éléments de soupape (9a, 9b) est fabriqué à partir d'une matière plastique injectée au niveau de l'arbre (8).

12. Dispositif de soupape selon l'une des revendications 3 à 11,
**caractérisé en ce que**
un revêtement composé d'un matériau réduisant la friction est prévu au niveau des côtés frontaux et/ou périphériques d'au moins un des deux disques de soupape (10a, 10b).

13. Dispositif de soupape selon l'une des revendications 3 à 12,
**caractérisé en ce que**
- au moins un des deux éléments de soupape (9a, 9b), de préférence les deux éléments de soupape (9a, 9b), est disposé/sont disposés de manière à pouvoir être déplacé/déplacés le long de la direction axiale (A) au niveau de l'arbre (8),
- le dispositif de soupape (1) comprend un dispositif de précontrainte (19), qui précontraint le premier et/ou le second élément de soupape (9a, 9b) en direction de la paroi frontale (2a, 2b) respectivement adjacente du boîtier (2).

14. Système de refroidissement (20) pour un moteur à combustion interne (23), en particulier d'un véhicule automobile, comprenant au moins une tête de cylindre au moins un bloc-cylindres,
- comprenant un circuit de réfrigérant (21) servant à faire circuler un réfrigérant, comprenant :
- un dispositif de soupape (1) selon l'une quelconque des revendications précédentes,
- dans lequel le premier passage de fluide (4a) du dispositif de soupape (1), en particulier la première admission de fluide (5a), communique de manière fluidique avec un circuit partiel de bloc-cylindres (25) du circuit de réfrigérant (21) et la seconde sortie de fluide (4b), en particulier la seconde admission de fluide (5b), communique de manière fluidique avec un circuit partiel de tête de cylindre (26) du circuit de réfrigérant (21), dans lequel le circuit partiel de tête de cylindre (26) est couplé thermiquement à l'au moins une tête de cylindre du moteur à combustion interne (23) et le circuit partiel de bloc-cylindres est couplé thermiquement à l'au moins un bloc-cylindres du moteur à combustion interne (23),
- dans lequel le troisième passage de fluide (4c), en particulier le premier passage de fluide (6a), communique de manière fluidique avec un circuit partiel de court-circuit (30) du circuit de réfrigérant (21) et le quatrième passage de fluide (4d), en particulier la seconde sortie de fluide (6b), communique de manière fluidique avec un circuit partiel de refroidisseur (31) du circuit de réfrigérant (21),
- dans lequel le circuit partiel de court-circuit (30) est branché fluidiquement en parallèle par rapport au circuit partiel de refroidisseur (31) et débouche, en aval d'un refroidisseur (27) disposé dans le circuit partiel de refroidisseur (31), en un point d'embranchement (32) à nouveau dans le circuit partiel de refroidisseur (31),
- dans lequel le circuit partiel de refroidisseur (31) se confond au point d'embranchement (32) avec le circuit partiel de bloc-cylindres (26),
- dans lequel le circuit partiel de bloc-cylindres (25) forme un embranchement avec le circuit partiel de bloc-cylindres (26) en un autre point d'embranchement (24) disposé en aval du point d'embranchement (32) et débouche dans le dispositif de soupape (1).

15. Système de refroidissement (20) selon la revendication 14,
**caractérisé en ce que**
- une soupape thermostatique (34) est disposée dans le circuit partiel de bloc-cylindres (25) en aval du moteur à combustion interne (23) et en amont du dispositif de soupape (1),
- un circuit partiel de dérivation de thermostat (35) forme un embranchement avec le circuit partiel de bloc-cylindres (25) en un point d'embranchement (36) en amont de la soupape thermostatique (34), lequel contourne de manière fluidique le thermostat (34) et débouche dans le dispositif de soupape (1).

16. Système de refroidissement selon la revendication 15,
**caractérisé en ce que**
sont prévus, dans le boîtier (2) du dispositif de soupape (1), précisément cinq passages de fluide (4a - 4d), qui peuvent être fermés ou être dégagés afin de laisser passer le flux de fluide, respectivement par l'un des deux éléments de soupape (9a, 9b),
- le cinquième passage de fluide est réalisé sous la forme d'une troisième admission de fluide, qui communique de manière fluidique avec le circuit partiel de dérivation de thermostat (35).
